(19) Europäisches Patentamt

European Patent Office

Office européen des brevets

(11) EP 0 858 157 A2

(12) EUROPÄISCHE PATENTANMELDUNG

(43) Veröffentlichungstag:
12.08.1998 Patentblatt 1998/33

(51) Int. Cl.⁶: **H03H 17/02**, H04J 1/05

(21) Anmeldenummer: 97120220.5

(22) Anmeldetag: 19.11.1997

(84) Benannte Vertragsstaaten:
**AT BE CH DE DK ES FI FR GB GR IE IT LI LU MC NL PT SE**
Benannte Erstreckungsstaaten:
**AL LT LV MK RO SI**

(30) Priorität: **29.01.1997 DE 19703079**

(71) Anmelder: **ROBERT BOSCH GMBH**
**70442 Stuttgart (DE)**

(72) Erfinder: **Goeckler, Heinz, Dr.**
**71522 Backnang (DE)**

(54) **Verfahren zur Aufbereitung von in einer Zwischenfrequenzlage angelieferten Bandpasssignalen**

(57)    Zur Aufbereitung von in Zwischenfrequenzlage angelieferten analogen Bandpaßsignalen erfolgt zuerst eine Abtastung, eine A/D-Umsetzung sowie eine Frequenzumsetzun und digitale Filterung.

Um insbesondere Zwischenfrequenzsignale unterschiedlicher Übertragungsnormen mittels gleicher Aufbereitungseinheiten zu verarbeiten, werden bestimmte Bedingungen für die Abtastfrequenz und die Nutzspektralanteile vorgegeben.

FIG. 1

EP 0 858 157 A2

## Beschreibung

### Stand der Technik

Die Erfindung betrifft ein Verfahren zur Aufbereitung von jeweils in einer Zwischenfrequenzlage angelieferten analogen Bandpaßsignalen insbesondere unterschiedlicher Übertragungsnormen.

Zur Bildung von Frequenzmultiplex-Signalen (FDM) mit digitaler Signalverarbeitung ist in der DE 40 26 477 A1 ein Verfahren angegeben, wie analoge Bandpaßsignale, die vorzugsweise modulierte TV-Signale in einer geeigneten Zwischenfrequenzlage darstellen, abgetastet und verarbeitet werden. Das abgetastete Bandpaßsignal wird mittels eines A/D-Umsetzers in ein digitales Bandpaßsignal umgesetzt und für die Weiterverarbeitung entsprechend digital gefiltert und digital in der Frequenz umgesetzt. Mehrere solcher Art aufbereiteter digitaler Bandpaßsignale werden derart in der Frequenz umgesetzt, daß sie im Frequenzbereich überlappungsfrei aneinander anschließen und durch digitale Addition zu einem Frequenzmultiplexsignal zusammengefaßt werden können. Für eine gewählte beziehungsweise vorgegebene Abtastfrequenz ist die Mittenfrequenz der Bandpaßsignale in engen Toleranzen festzulegen und einzuhalten, da die Abtastfrequenz nahe dem nach dem Abtasttheorem minimal zulässigen Wert gewählt ist. Als Folge sind zwar die Verarbeitungsraten in den digitalen Frequenzumsetzungseinrichtungen relativ niedrig; durch die schmalen Übergangsbereiche der vorgesehenen analogen Vorfilter, insbesondere Anti-Aliasingfilter, und der digitalen Filter wird der Gesamtaufwand dieser Realisierung wiederum aber dennoch relativ hoch. In einer Weiterbildung hiervon wird in einer Realisierung gemäß DE 43 37 134 A1 mit der verdoppelten Abtastfrequenz gearbeitet, was zu folgenden Vorteilen führt:

- Sämtliche Filteranforderungen sind entschärft (anlog und digital),
- die Nachbarkanalselektion (unmittelbar benachbarter Kanal) braucht nicht mehr von dem toleranzbehafteten analogen Anti-Aliasingfilter verwirklicht werden, sondern von einem robusten digitalen Tiefpaß,
- die Bandmittenfrequenz der zu verarbeitenden Bandpaßsignale ist gleich einer Standard-Zwischenfrequenz, z.B. nach einer europäischen Norm mit dem Bildträger bei 38,9 MHz, und es sind somit preisgünstige Standard-ZF-Filter als Antialiasingfilter vor der A/D-Umsetzung verwendbar.

### Vorteile der Erfindung

Mit den Maßnahmen gemäß dem Anspruch 1 lassen sich für unterschiedliche Übertragungsnormen einheitliche beziehungsweise gleichartige digitale Aufbereitungseinheiten verwenden. Die Anpassung an den jeweiligen Standard kann im wesentlichen softwaremäßig, das heißt durch Laden anderer Filterkoeffizienten und Mischerfrequenzen erfolgen. Mit den Maßnahmen nach der Erfindung ist es nicht notwendig für jede Fernsehnorm spezifische digitale Filter- beziehungsweise Frequenzumsetzungseinrichtungen vorzusehen.

Es können einfache digitale Filter ohne hohe Toleranzforderungen verwendet werden.

Das reellwertige analoge Bandpaßsignal wird in ein reelles digitales Bandpaßsignal umgesetzt. Eine eventuelle Überführung in ein komplexwertiges Signal erfolgt stets im Digitalen nach der A/D-Umsetzung. Dadurch werden die typischen Gleichlauf- und Toleranzprobleme bei der analogen Verarbeitung komplexwertiger Signale grundsätzlich vermieden.

In den Unteransprüchen sind vorteilhafte Ausgestaltungen aufgezeigt.

### Zeichnungen

Anhand der Zeichnungen werden Ausführungsbeispiele der Erfindung näher erläutert. Es zeigen:

Figur 1 ein Blockschaltbild für die Signalaufbereitung nach der Erfindung,
Figur 2 Frequenzspektren der Signalaufbereitung gemäß Figur 1,
Figur 3 ein weiteres Ausführungsbeispiel der Erfindung mit Abtastratenwandlung vor der Mischung,
Figur 4 ein Ausführungsbeispiel mit Aufspaltung der Abtastratenwandlung und
Figur 5 ein Ausführungsbeispiel mit einem komlexen Offset-Halbbandfilter und versetztem Durchlaßbereich.

### Beschreibung von Ausführungsbeispielen

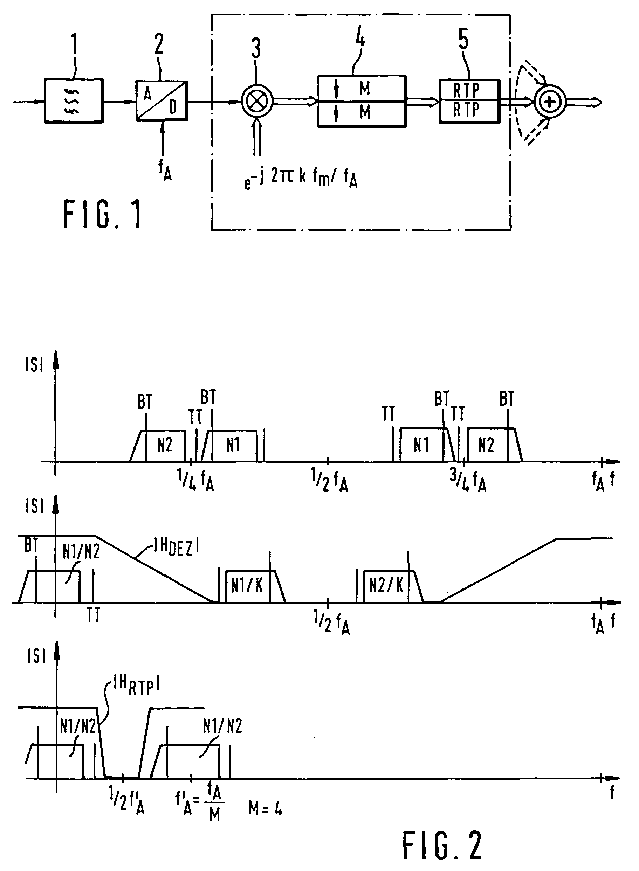

Figur 1 zeigt ein Blockschaltbild für eine erfindungsgemäße Signalaufbereitung. Ein eingangsseitiges TV-Norm ZF-Signal, z. B. nach dem europäischen Standard B (Kanalraster 7 MHz), Bildträger bei 38,9 MHz in Standard-Kehrlage, Tonträger bei 33,4 MHz oder nach dem US-Standard M,N (Kanalraster 6 MHz), Bildträger bei 45,75 MHz, Tonträger bei 41,25 MHz, ZF in Kehrlage, wird einem Anti-Aliasingfilter 1 zugeführt, welches das angelieferte analoge Bandpaßsignal in Standard ZF-Lage mit der genormten Nutzbandbreite so zu begrenzen hat, daß sich durch eine nachfolgende Überabtastung keine spektralen Überlappungen oder Überfaltungen mit dem Nutzsignalspektrum oder dessen Spiegelfrequenzen ergeben. Das analoge Bandpaßsignal wird dann mit der Abtastfrequenz $f_A$ überabgetastet und mittels eines A/D-Umsetzers 2 in ein digitales Bandpaßsignal umgesetzt. Überabtastung und A/D-Umsetzung werden beim Ausführungsbeispiel nach Figur 1 in einem Schritt durchgeführt. Für die Abtastfrequenz $f_A$ werden erfindungsgemäß bei vorgegebener Zwischenfrequenz $f_{ZF}$ folgende Bedingungen eingehalten ($f_{ZF}$ gibt hier die Mittenfrequenz des Spektrums des eingangsseitigen analogen Bandpaßsignals an):

$$f_{ZF} \approx (m + \tfrac{1}{4})\, f_A \qquad (1)$$

und : Nutzspektralanteile liegen im Frequenzbereich

$$( m f_A/2 ,\ (m + 1) \cdot f_A/2 ) \qquad (2)$$

wobei m ganzzahlig, insbesondere eine natürliche Zahl ist. Anschließend wird das digitale Bandpaßsignal in der Frequenz umgesetzt und digital gefiltert. Beim Ausführungsbeispiel nach Figur 1 schließt sich an den A/D Umsetzer 2 ein digitaler Mischer 3 an, mittels dessen das angelieferte Bandpaßsignal zur Frequenz f = 0 hin herabgemischt wird. Als Mischersignal wird eine komplexe Trägerschwingung exp ( -j $2\pi$ k $f_m$ / $f_A$ ) verwendet; $f_m$ gibt hier die Mittenfrequenz des Spektrums des digitalisierten Bandpaßsignals an, wobei im allgemeinen $f_m \neq f_{ZF}$. Je nach dem angelieferten Bandpaßsignal (Standard) erfolgt eine Mischung mit einer Mischfrequenz $f_{m1}$ oder $f_{m2}$. Die in Figur 1 dargestellten Doppelstriche im Signalweg deuten auf komplexe Signale hin. Nach der Mischung mit der komplexen Trägerschwingung erfolgt eine Verarbeitung des Realteils und des Imaginärteils jeweils getrennt in einem Dezimationsfilterpaar 4. Der Dezimationsfaktor ist mit M bezeichnet. Anschließend wird eine Nachbarkanalselektionsfilterung wieder getrennt nach Real- und Imaginärteil im Filterbaustein 5 vorgenommen. Die restliche Weiterverarbeitung zu einem digitalen Frequenzmultiplexsignal kann entsprechend der DE 43 37 134 A1 erfolgen. Vorteihaft läßt sich das Dezimationsfilterpaar 5 als Polyphasenfilter oder als Kaskade von Polyphasenfiltern, deren Einzeldezimationsfaktoren als Produkt den Wert des Gesamtdezimationsfaktors M ergeben, realisieren.

Weltweit gibt es eine Vielzahl unterschiedlicher Fernsehübertragungsnormen, bei denen auch unterschiedliche Zwischenfrequenzen ZF verwendet werden; beispielsweise liegt der Bildträger des modulierten TV-Signals für Standard B in der Standard-Kehrlage bei 38,9 MHz, bei dem in den USA verwendeten Standard M beziehungsweise N dagegen bei 45,75 MHz. Würde man für den Standard M z.B. das Verfahren gemäß DE 43 37 134 A1 verwenden, mit der hier benutzten Abtastfrequenz von etwa 28 Mhz (Kanalraster 7 MHz für Standard B), so würde beim Standard M obige Bedingung (2) verletzt werden. Eine Lösung des Problems wäre es, für jede Norm einen spezifischen digitalen Frequenzumsetzer zu entwickeln, was entweder das Abgehen von der jeweiligen Standard-ZF-Lage oder eine normspezifische Abtastfrequenz erfordern würde. Wie auch immer eine solche Lösung aussähe, wäre sie meist imkompatibel hinsichtlich des Zusammenspiels verschiedener Standards und in jedem Fall stets unwirtschaftlich. Bei der Erfindung hingegen lassen sich in verschiedenen Standards, z.B. Standard B und M, angelieferte ZF-Standard-Bandpaßsignale ohne Hardwareänderungen verarbeiten. Es sind lediglich andere Mischerfrequenzen $f_{m1}$ beziehungsweise $f_{m2}$ einzustellen und, falls erforderlich, manche Filter mit anderen Filterkoeffizienten zu versorgen. Um mit einer Aufbereitungseinrichtung unterschiedliche Standard-Bandpaßsignale verarbeiten zu können, muß zur Einhaltung der Bedingungen (1) und (2) die Eingangsabtastfrequenz $f_A$ in der Regel höher sein, als bei den Verfahren gemäß DE 40 26 477 A1 oder DE 43 37 134 A1. Beim Verfahren gemäß DE 43 37 134 A1 erfolgt die Abtastung mit $f_A$ = 28 MHz. Für die unterschiedlichen Normen nach Standard M und Standard B erfolgt die Abtastung bei der Erfindung stets mit $f_A$ = 56 MHz, egal nach welchem der vorgestellten Verfahren die Weiterverarbeitung vorgenommen wird.

Figur 2 zeigt die Verarbeitung für 2 TV-Standards mit der Anordnung gemäß Figur 1 wie auch für die weiteren Ausführungsbeispiele in einem Bild bezüglich der Frequenzspektren |S|. Selbstverständlich wird in der Anordnung gemäß Figur 1 jeweils nur ein Bandpaßsignal verarbeitet. Die Nutzsignalspektren der in der Zwischenfrequenzlage unterschiedlichen Bandpaßsignale sind mit N1 und N2 bezeichnet. Mit BT ist jeweils der Bildträger und mit TT der beziehungsweise die Tonträger bezeichnet. In der ersten Zeile von Figur 2 sind bei $\tfrac{1}{4}$ $f_A$ die Nutzspektren nach der Abtastung in Regellage dargestellt. Bei $\tfrac{3}{4}$ $f_A$ erscheinen die Nutzspektren in der Standard-ZF-Lage, also in Kehrlage. Die zweite Zeile von Figur 2 zeigt die Frequenzverschiebung nach der Herabmischung zu f = 0 mit der Mischfrequenz $f_{m1}$ beziehungsweise $f_{m2}$. |$H_{DEZ}$| gibt den Frequenzgang des Dezimationsfilters 4 an. In der dritten Zeile sind die Nutzspektren nach der Filterung durch das Filter 5 mit dem Frequenzgang |$H_{RTP}$| dargestellt.

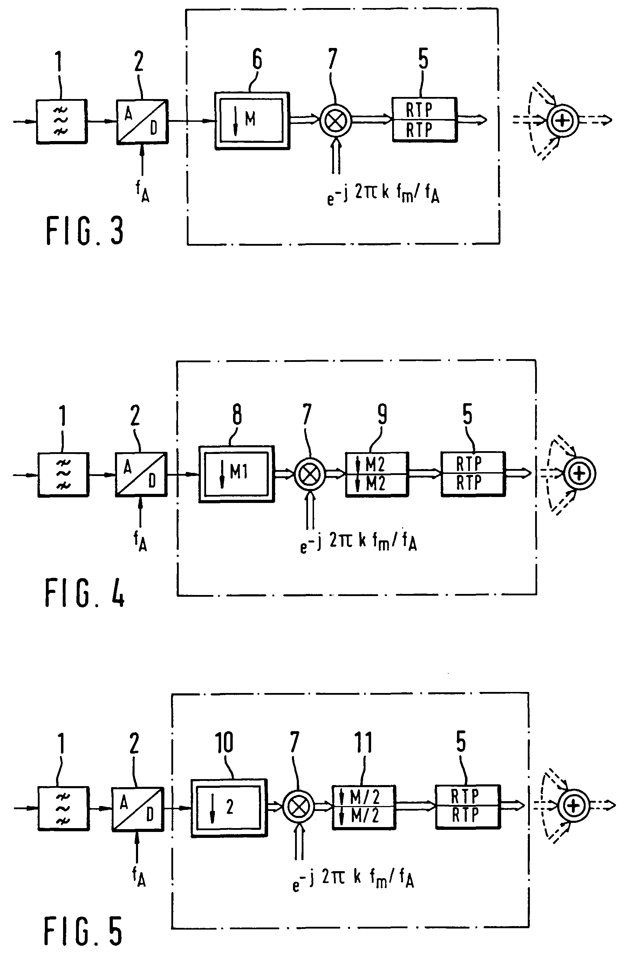

Um mit einer universellen digitalen Frequenzumsetzungsanordnung gemäß Figur 1 unterschiedliche Standard-Bandpaßsignale verarbeiten zu können, muß zur Einhaltung der Bedingungen (1) und (2) die Eingangsabtastfrequenz $f_A$ in der Regel höher sein, als bei Lösungen gemäß dem Stand der Technik. Für die Euro-Norm beispielsweise 28 MHz und für Euro/US-Normen nach einem der erfindungsgemäßen Verfahren: 56 MHz, was für alle erfindungsgemäßen Verfahren gleichermaßen gilt. Wegen der im allgemeinen erhöhten Eingangsabtastfrequenz ist es sehr von Vorteil, wenn man nach der A/D-Umsetzung vor dem ersten Verarbeitungsschritt sofort die Abtastfrequenz vermindert (Parallelisierung der Signalverarbeitung), damit gängige Technologien mit geringer Verlustleistung verwendbar sind. Eine solche Ausgestaltung ist in Figur 3 dargestellt.

Beim Ausführungsbeispiel nach Figur 3 wird nach der A/D-Umsetzung mittels A/D-Umsetzer 2 die Abtastfrequenz $f_A$ insbesondere mittels eines komplexen Bandfilters 6 um den Faktor M vermindert. Daran schließt sich ein digitaler Mischer 7 mit der komplexen Trägerschwingung exp ( -j $2\pi$ k $f_m$ / $f_A$ )als Mischfrequenz an gefolgt von den zuvor beschriebenen Nachbarkanalselektionsfiltern 5.

Die Ausgestaltung gemäß Figur 3 ist charakterisiert und unterscheidet sich von Figur 1 durch die Vertauschung der Reihenfolge von Mischung und Dezimationsfilterung nach der A/D-Umsetzung. Den Frequenzgang $|H_{DEZ}|$ des Dezimationsfilters 4 von Figur 2, zweite Zeile, muß man sich in Figur 2, erste Zeile, zu dem gewünschten Nutzspektrum - Regellage- hin verschoben vorstellen. Auf diese Weise entsteht ein Bandpaßfilter CBF, in Figur 3 mit Ziffer 6 bezeichnet, mit komplexen Koeffizienten (doppelte Umrandung des Filterblocks deutet auf komplexe Koeffizienten hin), ebenso wie Doppelstriche/Pfeile komplexe Signale kennzeichnen, das die Abstastfrequenz um den Faktor M vermindert. Wird Filter 6 wiederum als Polyphasenfilter realisiert, so erfolgt die Abtastratenverminderung (Parallelisierung) nach der A/D-Umsetzung vor dem ersten digitalen Verarbeitungsschritt. Die komplexen Koeffizienten von CBF erhält man beispielsweise dadurch, in dem man die Impulsantwort eines Prototypfilters -in der Regel ein Tiefpaß- auf eine komplexe Trägerschwingung mit der jeweiligs erforderlichen (Mischer-)Frequenz $f_{m1}$ beziehungsweise $f_{m2}$ aufmoduliert. Nach der dezimierenden komplexen Bandfilterung CBF erfolgt wie in Figur 1 die Abmischung des Nutzsignalspektrums zur Frequenz 0 und danach die restliche Verarbeitung in identischer Weise.

Eine Aufwandseinsparung erzielt man dadurch, daß man im Fall der Verwendung von nichtrekursiven FIR-Filter das allgemeine Filter mit komplexen Koeffizienten CBF als sogenanntes M-tel Bandfilter ausbildet CMBF. Bei CMBF sind manche Koeffizienten identisch 0 (jeder M-te; der mittlere Koeffizient ist 1/M). Man kann auch die Nullphase der modulierten Trägerschwingung so wählen, daß der Realteil der Impulsantwort symmetrisch ist und deren Imaginärteil antisymmetrisch, was sich wiederum für eine effiziente Realisierung nutzen läßt. Auch hier ist die Aufgabenstellung voll verwirklicht, da bei der Verarbeitung von Bandpaßsignalen nach einem anderen Standard lediglich neue Filterkoeffizienten geladen werden müssen.

Bei hohen Eingangsabtastfrequenzen -großem Dezimationsfaktor M- kann der Filtergrad des komplexen Bandfilter C(M)BF relativ groß sein. Für diesen Fall ist eine Aufspaltung von C(M)BF des komplexen Bandfilters 6, in eine Teilfilterkaskade vorteilhaft. Eine derartige Ausgestaltung zeigt Figur 4. Das komplexe Bandfilter 6 in Figur 3 wird in mindestens zwei Teilfilter 8 und 9 mit den Teildezimationsfaktoren M1 und M2 aufgespalten, wobei stets M1 • M2 = M ist. Das erste Teilfilter 8, wiederum ein C(M)BF-Filter mit komplexen Koeffizienten, ist vor dem Mischer 7 angeordnet und wird grundsätzlich nicht in weitere Teilfilter zerlegt. Das zweite Teilfilterpaar 9 zur Dezimation des komplexen Signals um den Faktor M2 weist wie bei Figur 1 reelle Koeffizienten auf und kann wie dort ggf. noch weiter in Teilfilter mit kleineren Dezimationsfaktoren zerlegt werden.

Eine besonders aufwandsgünstige Realisierung erhält man mit M1 = 2 und M2 = M/2 in Verbindung mit der Ausbildung des Eingangsfilter als M-tel Bandfilter C2BF. In diesem Fall ist der Prototyp für C2BF ein Halbbandfilter, bei dem jeder zweite Koeffizient bis auf den mittleren verschwindet. Der mittlere Koeffizient ist ½ . Gelingt es ferner, das Durchlaßband von C2BF für alle zu verarbeitenden Standard-Bandpaßsignale bei $\pm f_A/4$ zu zentrieren, so ist C2BF als CHBF-Filter gemäß EP 0 339 037 B1 mit minimalem Aufwand realisierbar.

Auch hier ist die Aufgabenstellung voll verwirklicht, da bei der Verarbeitung von Bandpaßsignalen nach einem anderen Standard lediglich neue Filterkoeffizienten und eine andere Mischerfrequenz $f_m$ geladen werden müssen. Beim Einsatz von einem CHBF ist es sogar möglich, alle Filter mit Ausnahme des Nachbarkanalselektionsfilters 5 (RTP) für alle zu verarbeitenden Standard-Bandpaßsignale mit denselben Koeffizienten auszustatten. Liegen die verschiedenen zu verarbeitenden Standard-Bandpaßsignale bei Einhaltung der Bedingungen (1) und (2) dennoch relativ weit ab von $\pm f_A/4$, so kann es im Hinblick auf eine kleinen Filtergrad des Eingangsfilters CHBF = C(M)BF gemäß der Ausgestaltung nach Figur 4 trotz minimalem Aufwand sinnvoll sein, dieses Filter gemäß der Ausgestaltung nach Figur 5 durch ein entsprechend aufwandgünstiges Halbbandfilter mit komplexen Koeffizienten und versetztem Durchlaßbereich bei:

$f_m = (2\,m + 1)\,f_A\,/\,8$ wobei m = 0,1,2,3... ist, als komplexes Offset-Halbbandfilter COHBF -Filterblock 10- gemäß DE 196 277 87.6 zu realisieren, das die Abtastfrequenz wie bei Figur 4 um M1 = 2 vermindert. Eine weitere Abtastfrequenzverminderung kann nach der Herabmischung mittels Mischer 7 wie beim Ausführungsbeispiel gemäß Figur 4 durch das Teilfilterpaar 9 zur Dezimation um den Faktor M2 = M/2 realisiert werden.

Je nach spektraler Lage der zu verarbeitenden Standard-Bandpaßsignale kann es sinnvoll sein, zwischen Filterfunktonen vom Typ CHBF und vom Typ COHBF umzuschalten. Ist in dem Eingangsfilterblock die Verarbeitung der Standard-Bandpaßsignale mit minimalem Aufwand gemäß den C(O)HBF-Strukturen realisiert, so erfordert die Umschaltung zwischen diesen beiden Filtertypen keine Umstrukturierung des Eingangsfilterblocks. Sieht man als Hardware für C(O)HBF eine allgemeine CBF-Struktur vor, so kann auch in diesem Eingangsfilterblock die Umkonfigurierung beim Ausführungsbeispiel gemäß Figur 1 rein softwaremäßig durch Ändern der/mancher Filterkoeffizientensätze erfolgen. Demnach ist auch hier die Aufgabenstellung voll verwirklicht, da bei der Verarbeitung von Bandpaßsignalen nach einem anderen Standard lediglich neue Filterkoeffizienten geladen werden müssen.

Grundsätzlich können für alle bisher vorgestellten Ausführungsbeispiele die Filter zur Abtastratenverminderung/-veränderung vorteilhaft als nicht rekursive FIR-Filter ausgebildet werden. Weitere Aufwandsvorteile ergeben sich durch die Ausgestaltung der FIR-Filter als linearphasige Filter, da dann die Impulsantwort/Koeffizienten symmetrisch sind.

Die bisherigen Ausführungsbeispiele bezogen sich ausschließlich auf die Zusammenfassung von Standard-Bandpaßsignalen zu FDM-Signalen nach der Verarbeitung in einem universellen digitalen Frequenzumsetzer, der nach der Nachbarkanalselektionsfilterung die Abtastfrequenz auf den für das FDM-Signal erforderlichen Wert erhöht. Wendet man auf die beschriebenen Verfahren für die Zusammenfassung die Regeln der Transposition gemäß dem Fachbuch „Crochiere/Rabiner" „Multirate Digital Signal Processing", insbesondere Seiten 68 bis 70, Prentice Hall, 1983, an, so erhält man die transponierten Strukuren zur Aufspaltung von FDM-Signalen in einzelne (Standard-)Bandpaßsignale.

**Patentansprüche**

1. Verfahren zur Aufbereitung von jeweils in einer Zwischenfrequenzlage angelieferten analogen Bandpaßsignalen, insbesondere unterschiedlicher Übertragungsnormen, mit folgenden Schritten:

   - ein jeweils in Zwischenfrequenzlage angeliefertes Bandpaßsignal wird abgetastet, wobei für die Abtastfrequenz $f_A$ und die jeweilige Zwischenfrequenz $f_{ZF}$ folgende Bedingungen eingehalten werden:

   $$f_{ZF} \approx (m \pm \tfrac{1}{4}) f_A \text{ und}$$

   - die Nutzspektralanteile liegen im Frequenzbereich $( mf_A / 2 , (m + 1) f_A / 2 )$, wobei m ganzzahlig ist,

   - ein derart abgetastetes Bandpaßsignal wird analog/digital in ein digitales Bandpaßsignal umgesetzt und für eine Weiterverarbeitung entsprechend digital gefiltert und digital in der Frequenz umgesetzt.

2. Verfahren nach Anspruch 1, dadurch gekennzeichnet, daß mehrere solcher Art aufbereiteter digitaler Bandpaßsignale gleicher und/oder unterschiedlicher Übertragungsnormen zu einem gemeinsamen Frequenzmultiplexsignal zusammengefaßt werden unter Verwendung gleichartiger Aufbereitungseinheiten, welchen lediglich voneinander für die Frequenzmultiplexbildung und/oder Normumsetzung unterschiedliche Mischfrequenzen und zumindest im Falle unterschiedlicher Übertragungsnormen unterschiedliche Filterkoeffizienten zuführbar sind.

3. Verfahren nach Anspruch 1 oder 2, dadurch gekennzeichnet, daß eine Überführung der Bandpaßsignale in komplexwertige Signale nach der A/D-Umsetzung (2) vorgenommen wird.

4. Verfahren nach einem der Ansprüche 1 bis 3, dadurch gekennzeichnet, daß nach der A/D-Umsetzung (2) des Bandpaßsignals , eine Herabmischung (3) des Nutzsignalspektrums zur Frequenz 0 hin mit einer komplexen Trägerfrequenz vorgenommen wird und anschließend eine Abtastratenverminderung (4) und eine Nachbarkanalselektionsfilterung (5) erfolgt.

5. Verfahren nach einem der Ansprüche 1 bis 3, dadurch gekennzeichnet, daß nach der A/D-Umsetzung (2) eine Abtastratenverminderung insbesondere mittels eines Bandpaßfilters (6) mit komplexen Koeffizienten vorgenommen wird, daß anschließend eine Herabmischung (7) des Nutzignalspektrums zur Frequenz 0 hin und eine Nachbarkanalselektionsfilterung (5) erfolgt.

6. Verfahren nach Anspruch 5, dadurch gekennzeichnet, daß die Abtastratenverminderung in zwei Schritten vorgenommen wird, wobei die erste Abtastratenverminderung (8) vor der Herabmischung (7) und die zweite Abtastratenverminderung (9) nach der Herabmischung vorgenommen wird.

7. Verfahren nach Anspruch 6, dadurch gekennzeichnet, daß die erste Abtastratenverminderung mit dem Faktor 2 und die zweite Abtastratenverminderung mit dem Faktor M/2 vorgenommen wird.

8. Verfahren nach einem der Ansprüche 1, 6 oder 7, dadurch gekennzeichnet, daß das digitalisierte Bandpaßsignal, insbesondere wenn es relativ weit ab von $\pm f_A/4$ liegt, mittels eines Halbbandfilters (10) mit komplexen Koeffizienten und versetztem Durchlaßbereich bei: $f_m = (2 m + 1) f_A / 8$ mit m = 0,1,2,3,... wobei $f_m$ die Mittenfrequenz des Durchlaßbereiches angibt, nach der A/D-Umsetzung (2) gefiltert wird.

9. Verfahren nach einem der Ansprüche 1 bis 8, dadurch gekennzeichnet, daß die Abtastfrequenz $f_A$ für unterschiedliche Übertragungsnormen, insbesondere nach TV-Standard B und M, zu etwa 56 MHz gewählt wird.

10. Verfahren nach einem der Ansprüche 1 bis 9, dadurch gekennzeichnet, daß zur Abtastratenverminderung Polyphasenfilter oder Kaskaden von Polyphasenfiltern verwendet werden, deren Einzeldezimationsfaktoren als Produkt den Wert des Gesamtdezimationsfaktors M ergeben.

11. Verfahren nach einem der Ansprüche 5 bis 10, dadurch gekennzeichnet, daß bei Verwendung von nichtrekursiven Filtern das allgemeine Filter mit komplexen Koeffizienten (CBF) als M/tel Bandfilter (CMBF) ausgebildet wird, bei dem jeder M-te Koeffizient identisch 0 ist, und der mittlere Koeffizient 1/M ist.

12. Verfahren nach einem der Ansprüche 4 bis 11, dadurch gekennzeichnet, daß die Nullphase der modulierten Trägerfrequenz so gewählt wird, daß der Realteil der Impulsantwort symmetrisch ist und der Imaginärteil antisymmetrisch ist oder umgekehrt.

13. Verfahren nach einem der Ansprüche 6 bis 12, dadurch gekennzeichnet, daß die Abtastratenverminderung mittels eines Bandfilters mit komplexen Koeffizienten oder mittels eines komplexen M-tel Bandfilters (CMBF) vorgenommen wird, daß zur zweiten Abtastratenverminderung Teilfilterpaare mit reellen Koeffizienten vorgesehen sind für die getrennte Verarbeitung von Realteil und Imaginärteil des herabgemischten Bandpaßsignals, wobei gegebenenfalls die Abtastratenverminderung noch weiter in Teilfilter mit kleineren Dezimationsfaktoren zerlegt wird.

14. Verfahren nach Anspruch 7 und 13 dadurch gekennzeichnet, daß bei Zentrierung des Durchlaßbandes des für die erste Abtastratenverminderung verwendeten komplexen M-tel Bandfilters (C2BF) für alle zu verarbeitenden Standard-Bandpaßsignale bei $\pm f_A / 4$ ein komplexes Halbbandfilter (CHBF) verwendet wird, bei dem jeder zweite Koeffizient bis auf den mittleren identisch 0 ist.

15. Verfahren nach einem der Ansprüche 1 bis 14, dadurch gekennzeichnet, daß alle Filterfunktionen zur Abtastratenverminderung als nichtrekursive Filter in insbesondere linearphasiger Form mit symmetrischen Koeffizienten realisiert werden.

16. Verfahren zur Aufspaltung von Frequenzmultiplexsignalen in einzelne Bandpaßsignale unter Verwendung von Schritten, die zu den in den Ansprüchen 2 bis 15 enthaltenden Schritten transponiert sind.

EP 0 858 157 A2

FIG. 1

FIG. 2

7

FIG. 3

$e^{-j\,2\pi\,k\,f_m/\,f_A}$

FIG. 4

$e^{-j\,2\pi\,k\,f_m/\,f_A}$

FIG. 5

$e^{-j\,2\pi\,k\,f_m/\,f_A}$